# EUROPÄISCHE PATENTSCHRIFT

(11) **EP 1 201 531 B1**
(45) Veröffentlichungstag und Bekanntmachung des Hinweises auf die Patenterteilung: **12.12.2007**
(21) Anmeldenummer: 01123625.4
(22) Anmeldetag: 02.10.2001
(51) Int. Cl.: B62D 43/02

(54) **Haltevorrichtung für ein Reserverad eines Kraftfahrzeugs**
Spare wheel attachment assembly for a motor car
Dispositif de fixation de roue de secours de véhicule automobile

(30) Priorität: 25.10.2000 DE 10052733
(43) Veröffentlichungstag der Anmeldung: 02.05.2002
(73) Patentinhaber: Dr.Ing. h.c. F. Porsche Aktiengesellschaft, 70435 Stuttgart (DE)
(72) Erfinder: Eberle, Wilfried, 89584 Ehingen (DE); Jahn, Rüdiger, 71229 Leonberg (DE); Benirschke, Oliver, 71229 Leonberg (DE)

(56) Entgegenhaltungen:
- DE-U- 9 104 581
- PATENT ABSTRACTS OF JAPAN vol. 008, no. 132 (M-303), 20. Juni 1984 (1984-06-20) & JP 59 032571 A (NISSAN JIDOSHA KK), 22. Februar 1984 (1984-02-22)

## Beschreibung

Die Erfindung bezieht sich auf eine Haltevorrichtung für ein Reserverad eines Kraftfahrzeugs nach dem Oberbegriff des Anspruchs 1.

Aus der US 3 845 891 ist eine Haltevorrichtung für ein Reserverad eines Kraftfahrzeugs bekannt, die über beabstandete Lagerungen außenseitig am Heck eines Fahrzeugaufbaus befestigt wird, welche eine vertikale Schwenkachse bilden. Die Haltevorrichtung ist von einer Festsetzstellung in eine Freigabestellung verschwenkbar, wobei die Möglichkeit besteht, ein Verschwenken vom Heck bis zur Seitenwand durchzuführen. Aus der gattungsgemäßen JP-A-59032571 ist eine Haltevorrichtung für ein Reserverad eines Kraftfahrzeugs bekannt, die außenseitig einer schwenkbaren Heckklappe eines Fahrzeugs angeordnet ist. Die Haltevorrichtung umfasst Tragarme, welche den Radträger aufnehmen, wobei die Tragarme über Lagerungen am Fahrzeugaufbau schwenkbar gehalten sind und von der Haltevorrichtung wegragend sind und die endseitig am Fahrzeugaufbau in Lagerungen gehalten sind und eine unabhängig von einer Schwenkachse der Heckklappe angeordnete vertikale Schwenkachse bilden. Der Radträger ist um diese Schwenkachse in eine Festsetzstellung an das Fahrzeugheck heranschwenkbar und in der Festsetzstellung über ein Abstützteil in einem Halteelement am Stoßfängerquerträger - den Lagerungen gegenüberliegend - gehalten und in der Freigabestellung von der Heckklappe frei schwenkbar angeordnet.

Aufgabe der Erfindung ist es, eine verbesserte Haltevorrichtung für ein Reserverad am Heck eines Kraftfahrzeugs zu schaffen, die losgelöst von einer Heckklappe mit einem optimalen Schwenkbereich für sich allein verschwenkbar ist und die Lagerungen aus einfach zu montierenden Bauteilen bestehen, die auch nachrüstbar sind und weitgehendst verdeckt im Fahrzeugbau angeordnet werden können.

Diese Aufgabe wird erfindungsgemäß durch die Merkmale des Anspruchs 1 gelöst. Weitere vorteilhafte Merkmale beinhalten die Unteransprüche.

Die Haltevorrichtung für ein Reserverad ist am Heck des Fahrzeugs auf der Heckklappe vorgesehen und weist eine Haltevorrichtung auf, die vom Radträger wegragende und zueinander beabstandete Tragarme umfasst. Diese sind endseitig mit am Fahrzeugbau gehaltenen Lagerungen verbunden, und bewirken eine unabhängig von einer Schwenkachse der Heckklappe angeordnete vertikale Schwenkachse, so dass der Radträger um diese Schwenkachse in eine Festsetzstellung ans Fahrzeugheck heranschwenkbar ist und eine sogenannte Freigabestellung einnehmen kann, bei der die Heckklappe aufschwenkbar bzw. abschwenkbar ist.

Durch diese Ausbildung der Haltevorrichtung mit einer unabhängig von der Heckklappe angeordneten vertikalen Schwenkachse, kann die Heckklappe geöffnet werden, wenn der Radträger um seine vertikale Schwenkachse von der Heckklappe weggeschwenkt ist. Die Heckklappe ist nicht vom Radträger belastet.

Zur gesicherten Aufnahme des Reserverades besteht der Radträger beispielsweise aus einem sog. Schalenkörper, der von einem profilierten Rahmen umgeben ist und die Tragarme sich etwa in Verlängerung des oberen und unteren Randes des Rahmens erstrecken.

Diese Ausbildung ergibt einen stabilen Radträger, der durch die vom Schalenkörper wegragenden Tragarme annähernd mittig des Fahrzeughecks angeordnet werden kann. Der profilierte Rahmen kann auch aus einem Rohrrahmen bestehen, wobei der Radträger auch anders als aus einem Schalenkörper bestehen kann.

Damit die Schwenkachse vertikal am Fahrzeug anzuordnen ist, weist die obere Lagerung eine Lagerkonsole mit Bolzenbohrungen für die vertikale Schwenkachse auf, wobei die Lagerkonsole verdeckt in einer Seitenfuge der Heckklappe im Fahrzeugaufbau angeordnet ist und über einen Haltewinkel mit einer Säule des Fahrzeugaufbaus verbunden wird und die Bolzenbohrungen an der heckseitigen Aussenseite der Säule verlaufen. Der Haltewinkel ist mit seinem einen Befestigungsschenkel für die Lagerkonsole an einer Innenwandfläche der Säule und mit seinem weiteren Halteschenkel an einer Aussenwandfläche der Säule befestigbar.

Damit die Lagekonsole in einer Fuge zwischen der Fahrzeugsäule (D-Säule) und der Heckklappe verdeckt anzuordnen ist, weist die Karosseriesäule zur innenseitigen Anordnung des Befestigungsschenkels des Haltewinkels eine sog. Durchstecköffnung auf. Die Verbindung der Lagekonsole mit dem Haltewinkel wird in einfacher Weise dadurch erzielt, dass die Lagerkonsole einen zum Befestigungswinkel des Haltewinkels korrespondierend angeordneten vorragenden Arm aufweist, an dem sich ein im Querschnitt U-förmig ausgebildetes Lagersegment anschließt. Dieses weist im Abstand übereinander angeordnete Lagerplatten auf, in denen die Bolzenbohrungen angeordnet sind, welche sich mit ihrer Rückseite an die äussere Fläche der Karosseriesäule formgenau anlegen. Zur Abdeckung der Lagerkonsole ist diese mit einem aufsteckbaren Abeckelement umgeben, das eine Öffnung für den Tragarm aufweist und das mit einer rückseitigen Stirnfläche dicht an die Aussenwandfläche der Säule des Fahrzeugaufbaus anschließt.

Die obere Lagerung kann im Fahrzeug in einfacher Weise nachgerüstet werden, bzw. schon beim Bau des Fahrzeugs vorgesehen sein, wobei dann nur der Haltewinkel mit der D-Säule des Fahrzeugaufbaus verbunden wird.

Die untere Lagerung umfasst im wesentlichen eine mit dem Fahrzeugaufbau verbundene Lagerkonsole sowie ein am Tragarm befestigtes Scharnierelement. Die Lagerkonsole weist eine rückseitige Befestigungsplatte und daran anschließende zueinander beabstandete Konsolplatten mit Bolzbohrungen für die vertikale Schwenkachse auf. Zwischen den Konsolplatten ist ein einsetzbarer Scharnierhebel auf Gleitbuchsen eines Scharnierbolzens verschwenkbar gehalten. Diese Lagerung ist weitestgehend vom Stoßfänger abgedeckt, so dass auch die eigentliche vertikale Schwenkachse verdeckt ist. Der Tragarm ist mit dem Scharnierelement verbunden und liegt in der Festsetzstellung eingebettet in einer Blende.

Die untere und obere Lagerung sind in der Weise ausgeführt, dass vor dem Öffnen der Heckklappe um eine horizontale Achse die Haltevorrichtung um die vertikale Achse nach aussen so weit verschwenkt wird, bis die Heckklappe frei bewegbar ist.

Die untere Lagerung weist zur Unterstützung der Schwenkbewegung in Richtung Festsetzstellung und in Richtung Freigabestellung mindestens eine Gasfeder auf, die einerseits an der Lagerkonsole und andererseits am Scharnierelement abgestützt bzw. mit diesem verbunden ist. Durch diese Anordnung der Gasfeder mit einer Wirkrichtung ausserhalb der vertikalen Schwenkachse in der Festsetz- und Freigabestellung wird ein Verschwenken in diese beiden Stellungen erleichtert; denn in der Festsetzstellung des Rades wird ein maximales Schließmoment mit einem Hebelarm erzielt, und bei einer Schwenkbewegung des Radträgers in Richtung Freigabestellung - nach Durchlaufen einer Totpunktstellung - wird ebenfalls ein maximales Schwenkmoment erzielt.

Die untere Lagerung kann zudem noch am Rastelement durch ein Verriegelungselement in der Endlage der Freigabestellung festgelegt werden. Hierzu weist das Scharnierelement endseitig eine Rastnut auf, die in der Freigabestellung von einem verstellbaren Verriegelungselement hintergriffen wird und zum Verschwenken des Scharnierelements mit Radträger von der Freigabestellung in die Festsetzstellung entriegelbar ausgeführt ist. Das Verriegelungselement besteht vorzugsweise aus einem verschwenkbaren Hebel, der mit seinem freien Ende in die Rastnut eingreift. Der Hebel wird vorzugsweise über einen Bolzen betätigt, der zum Verdrehen ansteuerbar ist.

Zur Abstützung und Verriegelung der Haltevorrichtung in der Festsetzstellung ist mit einem Stoßfängerquerträger ein kastenförmiges Halteelement verbunden, in das ein Abstützteil des Radträgers in der Festsetzungstellung haltend einsteckbar ist. In dem Halteelement ist ein Drehfallenschloss angeordnet, das mit einem Bolzen des Abstützteils in Eingriff steht und das Drehfallenschloss über Betätgigungsmittel ver- und/oder entriegelbar ist.

Durch dieses Halteelement ist die Haltevorrichtung für das Reserverad in der Feststellung am Fahrzeug zum einen abgestützt und zum andern gesichert gehalten.

Bei Nichtgebrauch der Haltevorrichtung kann diese abgeschraubt werden, indem beispielsweise die Scharnierbolzen entfernt werden bzw. die Lagerkonsolen abgeschraubt werden.

Ein Ausführungsbeispiel der Erfindung ist in den Zeichnungen dargestellt und wird im Folgenden näher beschrieben.

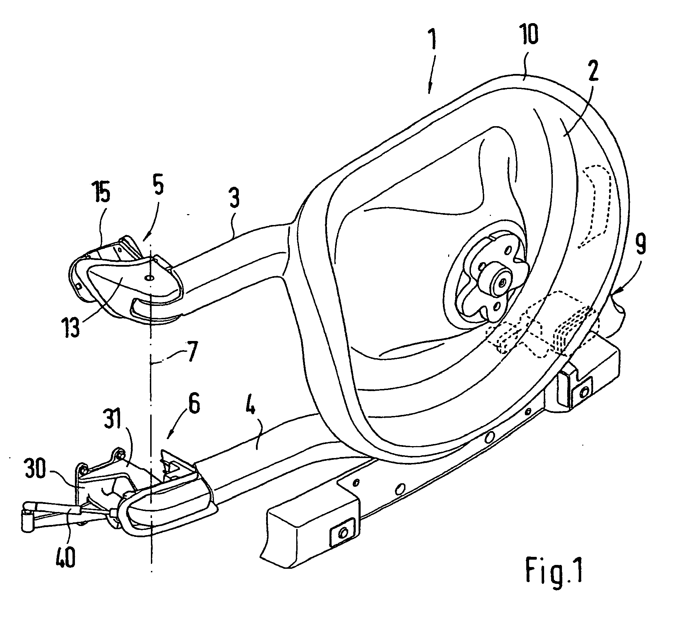

Es zeigen
- Fig. 1: eine schaubildliche Darstellung einer Haltevorrichtung für ein Reserverad,
- Fig. 2: einen Vertikalschnitt durch eine obere und untere Lagerung der Haltevorrichtung,

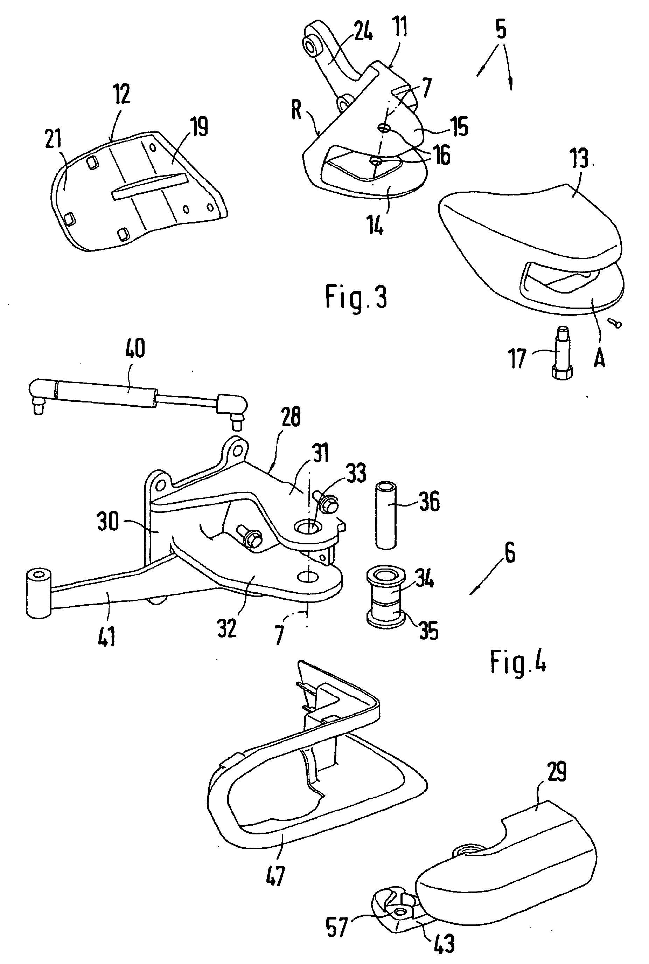

- Fig. 3: die obere Lagerung mit Haltewinkel, Lagerkonsole und Abdeckelement,
- Fig. 4: die untere Lagerung mit Lagerkonsole, Scharnierelement, Blende und Gasfeder,

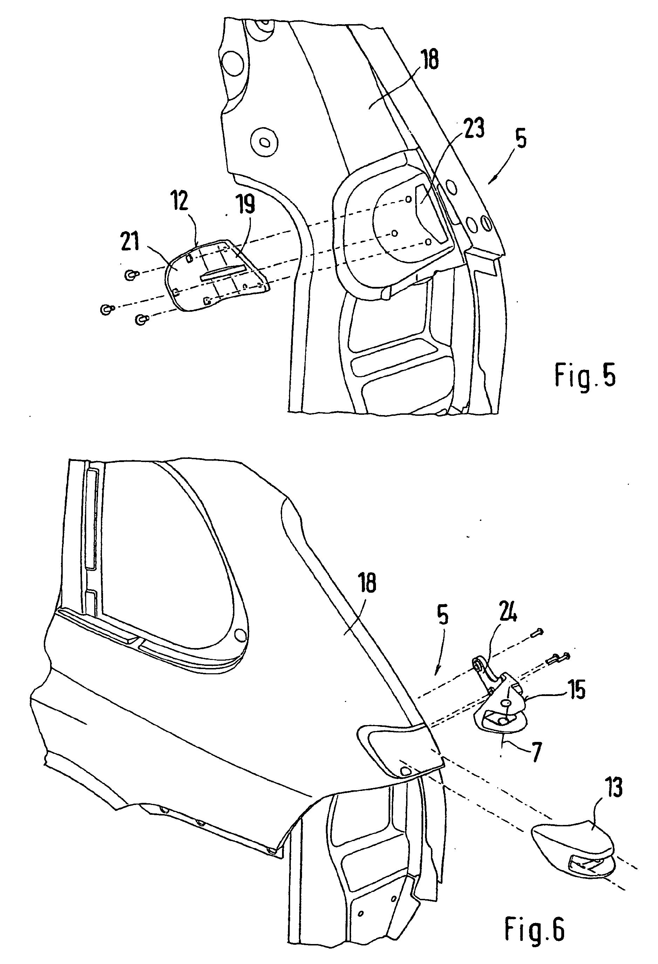

- Fig. 5: eine schaubildliche Darstellung auf die D-Säule mit Haltewinkel,
- Fig. 6: eine schaubildliche Darstellung auf die D-Säule mit Lagerkonsole und Abdeckelement,

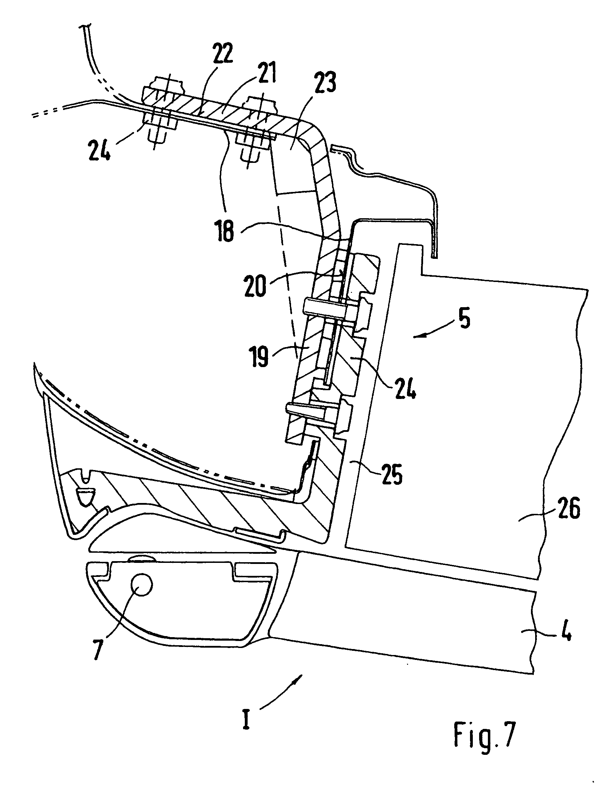

- Fig. 7: einen Horizontalschnitt durch die D-Säule im Bereich der oberen Lagerung durch den Haltewinkel und die Lagerkonsole,
- Fig. 8: eine Ansicht auf die untere Lagerung mit sichtbarem Scharnierelement der Lagerkonsole und Blende,
- Fig. 9: die untere Lagerung mit Befestigung an der D-Säule,
- Fig. 10: einen Horizontalschnitt durch die untere Lagerung mit dem Scharnierelement, in ausgezeichneten Linien in einer Festsetzstellung, in gestrichelt gezeichneten Linien in einer Freigabestellung,
- Fig. 11: einen Horizontalschnitt durch ein Halteelement mit Abstützteil und
- Fig. 12: das Halteelement mit Drehfallenschloss.

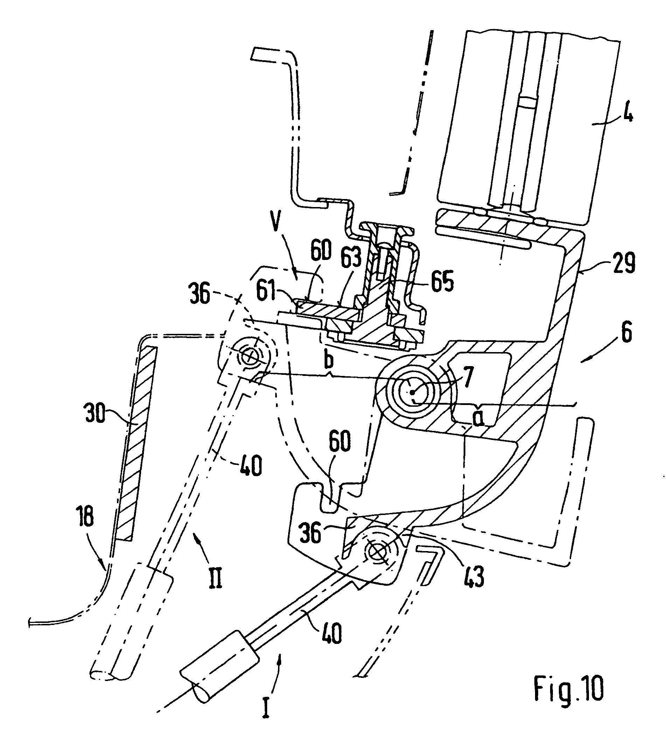

Die Haltevorrichtung 1 umfasst im wesentlichen einen Radträger 2 mit zwei wegragenden Tragarmen 3, 4, die zueinander beabstandet sind. Endseitig des Tragarmes 3 ist eine obere Lagerung 5 und endseitig des Tragarmes 4 ist eine untere Lagerung 6 vorgesehen. Diese beiden Lagerungen 5 und 6 ergeben eine vertikale Schwenkachse 7, durch welche die Haltevorrichtung 1 in eine Festsetzstellung I am Fahrzeugheck und in eine Freigabestellung II weggeschwenkt vom Fahrzeugheck anzuordnen ist, was in Fig. 10 angedeutet wird. In der Festsetzstellung I ist die Haltevorrichtung 1 in einer Abstützeinrichtung 9 am Fahrzeugaufbau gehalten.

Der Radträger 2 besteht vorzugsweise aus einem schalenförmigen, das Rad aufnehmenden Formteil, das von einem Rahmen, beispielsweise einem Rohrrahmen 10 umgeben ist, von der die Tragarme 3, 4 abzweigen.

Die obere Lagerung 5 umfasst im wesentlichen eine Lagerkonsole 11, einen Haltewinkel 12 und ein Abdeckelement 13. Die Lagerkonsole 11 weist zwei übereinander angeordnete Lagerplatten 14, 15 mit Bohrungen 16 für einen Lagerbolzen 17 auf, der mit dem Tragarm 3 verbunden ist. Zur Befestigung der Lagerkonsole 11 an einer D-Säule 18 des Fahrzeugaufbaus dient der Haltewinkel 12. Dieser ist mit seinem einen Befestigungsschenkel 19 an einer Innenwandfläche 20 der D-Säule 18 und mit seinem weiteren Halteschenkel 21 an einer Aussenwandfläche 22 der D-Säule 18 angeordnet.

Der Lagerbolzen 17 kann auch als Gelenk ausgeführt sein, wobei dann der Bolzen mit einer Kugel versehen ist, die zwischen entsprechend ausgebildeten Lagerschalen angeordnet wird. Dieses Kugelgelenk ist als weitere Ausführung möglich, da bei einem Bolzenscharnier durch das Gewicht der Haltevorrichtung Verzwängungen auftreten können, die durch das Kugelgelenk vermieden werden.

Der Befestigungsschenkel 19 wird durch eine Öffnung 23 in der D-Säule 18 gesteckt und von außen mit einem vorragenden Arm 24 der Lagerkonsole 11 verbunden, wobei der Haltewinkel 21 über Schrauben direkt mit der Wandung der D-Säule 18 verbunden wird.

Der vorragende Arm 24 der Lagerkonsole 11 ist in einer Seitenfuge 25 zwischen der Heckklappe 26 und der D-Säule 18 des Fahrzeugaufbaus vorgesehen und somit weitestgehend verdeckt und in vorteilhafter Weise raumsparend angeordnet.

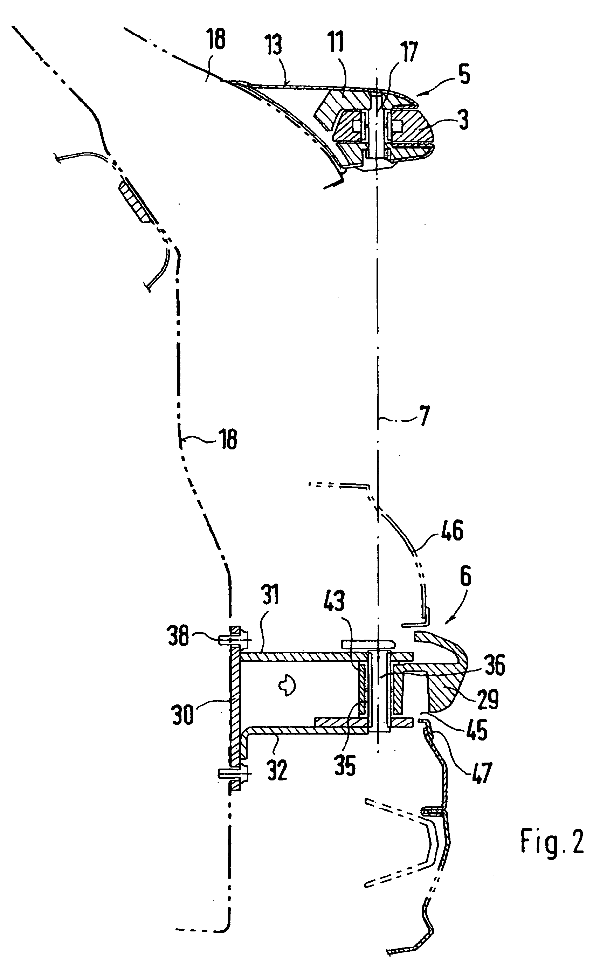

Wie in Fig. 6 im Vormontagezustand und in Fig. 2 im zusammengebauten Zustand der Lagerung 5 zu erkennen ist, wird die Lagerkonsole 11 von einem Abdeckelement 13 umschlossen, das aufsteckbar ausgebildet ist.

Die untere Lagerung 6 besteht vorzugsweise aus einer mit der D-Säule 18 im Wandbereich 27 verbundenen Lagerkonsole 28 sowie einem am Tragarm 4 befestigten Scharnierelement 29. Dieses wird mit der Lagerkonsole 28 über Bolzen 36 verbunden.

Die Lagerkonsole 28 weist an einer Rückenplatte 30 beabstandet angeordnete Lagerplatten 31, 32 mit Bolzenbohrungen 33 auf. Zwischen den Lagerplatten 31, 32 ist auf einer Gleitbuchse 34, 35 ein Scharnierhebel 43 des Elements 29 aufsetzbar.

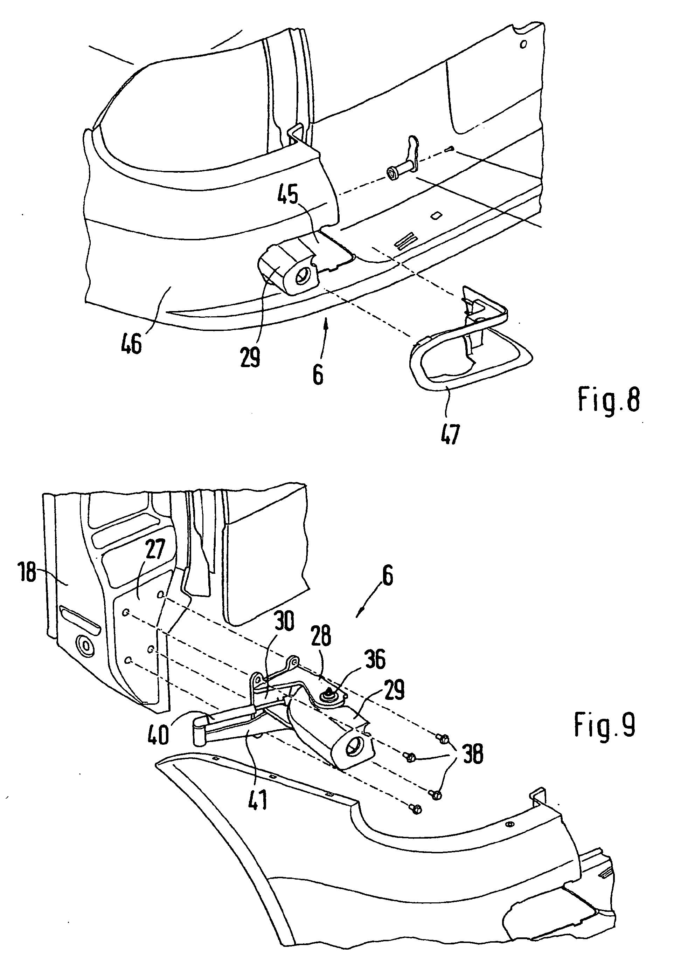

Wie in Fig. 9 näher dargestellt, wird die Rückenplatte 30 über Schrauben 38 mit der D-Säule 18 des Fahrzeugaufbaus verbunden. Zwischen der Lagerkonsole 28 und dem Scharnierelement 29 ist eine Gasfeder 40 angeordnet, die einerseits in einem abstehenden Hebel 41 der Konsole 28 und andererseits in einem abragenden Scharnierhebel 43 in einer Aufnahme 57 des Scharnierelements 29 eingehängt ist. Die Gasfeder 40 weist in der Festsetzstellung I und in der Freigabestellung II eine Wirkrichtung auf, die im Abstand a und im Abstand b zur vertikalen Schwenkachse 7 steht. Hierdurch wird zum einen in der Endlage der Festsetzstellung I und in der Endlage der Freigabestellung II eine unterstützende Wirkung erzielt und zum andern erfolgt eine Kraftunterstützung beim Verschwenken nach Durchfahren des Totpunktes von einer Stellung in die andere.

Wie in Fig. 8 näher dargestellt ist, wird die untere Lagerung 6 in einen Ausschnitt 45 des Stossfängers 46 eingesetzt, der von einer Blende 47 abgedeckt ist, in welcher das Scharnierelement 29 eingebettet angeordnet wird.

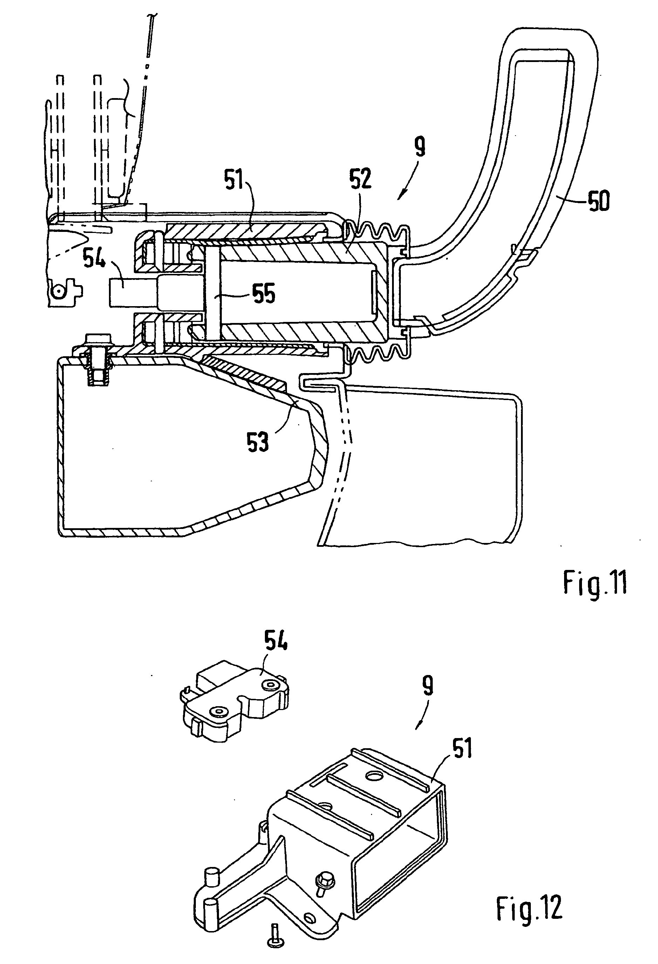

Gegenüberliegend der Tragarme 3,4 ist am Rahmen 9 des Radträgers 2 ein abstehender Arm 50 (Fig. 11) vorgesehen, der in einem kastenartigen Halteelement 51 über ein am Tragarm 4 befestigtes Abstützelement 52 in Lage gehalten wird. Dieses Halteelement 51 ist mit einem Stoßfängerquerträger 53 verbunden. Zum Arretieren des eingesteckten Abstützteiles 52 dient beispielsweise ein Drehfallenschloss 54, welches einen Bolzen 55 des Abstützteiles 52 in der Festsetzstellung I festhält. Über Betätigungsmittel ist eine Entriegelung möglich.

Des weiteren ist zum Festhalten der Haltevorrichtung 1 in der Freigabestellung II, d.h. in der aufgeschwenkten Stellung zum freien Verschwenken der Heckklappe ein Verriegelungselement V vorgesehen, das in eine Rastnut 60 des Scharnierelements 29 eingreift. Das Verriegelungselement V besteht vorzugsweise aus einem Hebel 61 an einem drehbaren Bolzen 65 (Fig. 10). Der Bolzen 65 kann zum Freigeben des Hebels 61 aus der Rastnut 60 verschwenkt werden, so dass die Haltevorrichtung 1 aus der Freigabestellung II in die Festsetzstellung I zurückschwenkbar ist.

## Patentansprüche

1. Haltevorrichtung für ein Reserverad eines Kraftfahrzeugs, die außenseitig einer schwenkbaren Heckklappe angeordnet ist und einen an Tragarmen gehaltenen Radträger umfasst, der über Lagerungen am Fahrzeugaufbau schwenkbar gehalten ist, **dadurch gekennzeichnet, dass** die Haltevorrichtung (1) vom Radträger (2) wegragende und zueinander beabstandete Tragarme (3, 4) umfasst, die endseitig mit am Fahrzeugaufbau gehaltenen Lagerungen (5, 6) verbunden sind und die eine unabhängig von einer Schwenkachse der Heckklappe angeordnete vertikale Schwenkachse (7) bilden und der Radträger (2) um diese Schwenkachse (7) in eine Festsetzstellung (I) an das Fahrzeugheck heranschwenkbar ist und in der Festsetzstellung (I) über ein Abstützteil (52) in einem Halteelement (51) am Stoßfängerquerträger (53) - den Lagerungen (5, 6) gegenüberliegend - gehalten ist und in einer Freigabestellung (II) von der Heckklappe frei schwenkbar angeordnet ist **dadurch gekennzeichnet, dass** der Radträger (2) einen zur Aufnahme des Reserverads ausgebildeten Schalenkörper (10) umfasst, der von einem Rahmen (9) umgeben ist und die Tragarme (3, 4) sich etwa in Verlängerung des oberen und unteren Randes des Rahmens (9) erstrecken, wobei das Abstützteil (52) an einem weiteren Tragarm (50) gehalten wird, der dem unteren Tragarm (4) gegenübersteht und dass die obere Lagerung (5) eine Lagerkonsole (11) für die vertikale, durch einen Scharnierbolzen (19) gebildete Schwenkachse (7) umfasst und die Lagerkonsole (11) in einer Seitenfuge (25) der Heckklappe (26) im Fahrzeugaufbau angeordnet und über einen Haltewinkel (12) mit einer Säule (18) des Fahrzeugaufbaus verbunden ist und dass die untere Lagerung (6) eine mit dem Fahrzeugaufbau verbundene Lagerkonsole (28) sowie ein am Tragarm (4) befestigtes Scharnierelement (29) umfasst und die Lagerkonsole (28) eine rückseitige Befestigungsplatte (30) und daran anschließende zueinander beabstandete Konsolplatten (31, 32) mit Bolzenbohrungen (33) für die vertikale Schwenkachse (7) aufweist und zwischen den Konsolplatten (31, 32) ein einsetzbarer Scharnierhebel (43) auf Gleitbuchsen (34, 35) eines Scharnierbolzens (36) verschwenkbar gehalten ist.

2. Haltevorrichtung nach Anspruch 1, **dadurch gekennzeichnet, dass** der Haltewinkel (12) mit seinem einen Befestigungsschenkel (19) für die Lagerkonsole (11) an einer Innenwandfläche (20) der Säule (18) und mit seinem weiteren Halteschenkel (21) an einer Außenwandfläche (22) der Säule (18) befestigt ist.

3. Haltevorrichtung nach den Ansprüchen 1 oder 2, **dadurch gekennzeichnet, dass** die Lagerkonsole (11) einen zum Befestigungsschenkel (19) des Haltewinkels (12) korrespondierend angeordneten vorragenden Arm (24) aufweist, an dem sich ein im Querschnitt U-förmig ausgebildetes Lagersegment anschließt, das im Abstand übereinander angeordnete Lagerplatten (14, 15), in denen die Bolzenbohrungen (16) angeordnet sind, aufweist, die sich mit ihrer Rückseite (R) an die äußere Wandfläche der Karosseriesäule (18) formgenau anlegt.

4. Haltevorrichtung nach einem oder mehreren der vorhergehenden Ansprüche, **dadurch gekennzeichnet, dass** die Karosseriesäule (18) zur innenseitigen Anordnung des Befestigungsschenkels (19) des Haltewinkels (12) eine Durchstecköffnung (23) aufweist.

5. Haltevorrichtung nach einem oder mehreren der vorhergehenden Ansprüche, **dadurch gekennzeichnet, dass** die Lagerkonsole (11) von einem aufsteckbaren Abdeckelement (13) umgeben ist, das eine Öffnung (A) für den Tragarm (4) aufweist und das mit einer rückseitigen Stirnfläche dicht an die Wandfläche der Säule (18) anschließt,

6. Haltevorrichtung nach einem oder mehreren der vorhergehenden Ansprüche, **dadurch gekennzeichnet, dass** zwischen der Lagerkonsole (28) und dem Scharnierelement (29) eine Gasfeder (40) angeordnet ist, die einerseits an einem abstehenden Hebel (41) der Lagerkonsole (28) und andererseits in einer Aufnahme (55) am Scharnierhebel (43) angelenkt ist.

7. Haltevorrichtung nach Anspruch 9, **dadurch gekennzeichnet, dass** die Gasfeder (40) in der Festsetzstellung (I) des Radträgers (2) ein max. Schließmoment mit dem Hebelarm (a) aufweist und bei einer Schwenkbewegung des Radträgers (2) in Richtung Freigabestellung (II) - nach Durchlaufen einer Totpunktstellung - ein maximales Schwenkmoment mit dem Hebelarm (b) aufweist.

8. Haltevorrichtung nach einem oder mehreren der vorhergehenden Ansprüche, **dadurch gekennzeichnet, dass** die untere Lagerung (6) in einem Ausschnitt (45) des Stoßfängers (46) angeordnet ist, in dem eine Blende (47) angeordnet ist und in welche das Scharnierelement (29) von außen einsetzbar eingebettet wird.

9. Haltevorrichtung nach einem oder mehreren der vorhergehenden Ansprüche, **dadurch gekennzeichnet, dass** mit dem Stoßfängerquerträger (53) ein kastenartiges Halteelement (51) verbunden ist, in das ein Abstützteil (52) des Radträgers (2) in der Festsetzstellung (I) haltend einsteckbar ist.

10. Haltevorrichtung nach einem oder mehreren der vorhergehenden Ansprüche, **dadurch gekennzeichnet, dass** im Halteelement (51) ein Drehfallenschloss (54) angeordnet ist, das mit einem Bolzen (55) des Abstützteiles (52) in Eingriff steht und das Drehfallenschloss (54) über Betätigungsmittel ver- und/oder entriegelbar ist.

11. Haltevorrichtung nach einem oder mehreren der vorhergehenden Ansprüche, **dadurch gekennzeichnet, dass** der Scharnierbolzen (17) der oberen Lagerung (5) aus einem Gelenkelement besteht, das einen Kugelabschnitt am Bolzen (17) aufweist, der in korrespondierenden Lagerschalen der Lagerkonsole (11) gehalten wird.

12. Haltevorrichtung nach einem oder mehreren der vorhergehenden Ansprüche, **dadurch gekennzeichnet, dass** das Scharnierelement (29) endseitig eine Rastnut (60) aufweist, die in der Freigabestellung (II) von einem verstellbaren Verriegelungselement (61) hintergriffen wird und zum Verschwenken des Scharnierelements (29) mit dem Radträger (2) von der Freigabestellung (II) in die Festsetzstellung (I) entriegelbar ausgeführt ist.

13. Haltevorrichtung nach Anspruch 12, **dadurch gekennzeichnet, dass** das Verriegelungselement (V) aus einem verschwenkbaren Hebel (61) auf einem Bolzen (65) besteht und der Hebel (61) mit seinem freien Ende in die Rastnut (60) eingreift.

## Claims

1. A retaining apparatus for a spare wheel of a motor vehicle, which is arranged on the outside of a pivotable tailgate and which comprises a wheel carrier which is held on support arms and which is held in a pivotable manner by way of mountings on the vehicle body, **characterized in that** the retaining apparatus (1) comprises support arms (3, 4) which project away from the wheel carrier (2) and are arranged at a distance from each other and which are connected at their ends to mountings (5, 6) held on the vehicle body and which form a vertical pivot axis (7) arranged independently of a pivot axis of the tailgate, and the wheel carrier (2) is pivotable about the said pivot axis (7) into a fixed position **(I)** on the tail of the vehicle and in the fixed position **(I)** it is held - opposite the mountings (5, 6) - by way of a support part (52) in a retaining element (51) on the cross member (53) of the bumper and in a release position **(II)** it is arranged so as to be freely pivotable from the tailgate, **characterized in that** the wheel carrier (2) comprises a shell body (10) which is designed to receive the spare wheel and which is surrounded by a frame (9), and the support arms (3, 4) extend substantially as a continuation of the upper and lower edges of the frame (9), wherein the support part (52) is held on a further support arm (50) which is opposite the lower support arm (4), and the upper mounting (5) comprises a bearing bracket (11) for the vertical pivot axis (7) formed by a hinge pin (19), and the bearing bracket (11) is arranged in a lateral join (25) of the tailgate (26) in the vehicle body and is connected by way of a retaining angle member (12) to a pillar (18) of the vehicle body, and the lower mounting (6) comprises a bearing bracket (28) connected to the vehicle body as well as a hinge element (29) fastened to the support arm (4), and the bearing bracket (28) has a fastening plate (30) at the rear and bracket plates (31, 32) attached thereto and arranged at a distance from each other and having pin bores (33) for the vertical pivot axis (7) and between the bracket plates (31, 32) a hinge lever (43) capable of being inserted is held in a pivotable manner on sliding bushes (34, 35) of a hinge pin (36).

2. A retaining apparatus according to Claim 1, **characterized in that** the retaining angle member (12) is fastened by one (19) of its fastening legs for the bearing bracket (11) to an internal wall face (20) of the pillar (18) and by its other fastening leg (21) to an external wall face (22) of the pillar (18).

3. A retaining apparatus according to Claim 1 or 2, **characterized in that** the bearing bracket (11) has a projecting arm (24) which is arranged in a manner corresponding to the fastening leg (19) of the retaining angle member (12) and which is adjoined by a bearing segment which is made U-shaped in cross-section and which has bearing plates (14, 15) which are arranged at a distance one above the other and in which are formed the pin bores (16) and which rest in a precisely shaped manner with their rear side (R) against the external wall face (22) of the bodywork pillar (18).

4. A retaining apparatus according to one or more of the preceding Claims, **characterized in that** the bodywork pillar (18) has an insertion opening (23) for arranging the fastening leg (19) of the retaining angle member (12) on the inside.

5. A retaining apparatus according to one or more of the preceding Claims, **characterized in that** the bearing bracket (11) is surrounded by an attachable covering element (13) which has an opening (A) for the support arm (4) and which with a rear end face rests tightly against the wall face of the pillar (18).

6. A retaining apparatus according to one or more of the preceding Claims, **characterized in that** a gas spring (40), which is articulated at one end to a projecting lever (41) of the bearing bracket (28) and at the other end in a receiving means (55) to the hinge lever (43), is arranged between the bearing bracket (28) and the hinge element (29).

7. A retaining apparatus according to Claim 9 [*sic*]*,* **characterized in that** in the fixed position **(I)** of the wheel carrier (2) the gas spring (40) has a maximum closing moment with the lever arm **(a)** and during a pivoting movement of the wheel carrier (2) in the direction of the release position **(II)** - after passing through a dead centre position - it has a maximum pivoting moment with the lever arm **(b)**.

8. A retaining apparatus according to one or more of the preceding Claims, **characterized in that** the lower mounting (6) is arranged in a cut-away portion (45) of the bumper (46) in which a screen (47) is arranged and into which the hinge element (29) is embedded in a manner capable of being inserted from the outside.

9. A retaining apparatus according to one or more of the preceding Claims, **characterized in that** a box-like retaining element (51), into which a support part (52) of the wheel carrier (2) is capable of being inserted in a retaining manner in the fixed position (I), is connected to the cross member (53) of the bumper.

10. A retaining apparatus according to one or more of the preceding Claims, **characterized in that** a rotary-latch lock (54) which engages with a pin (55) of the support part (52), is arranged in the retaining element (51), and the rotary-latch lock (54) is capable of being locked and/or unlocked by way of actuating means.

11. A retaining apparatus according to one or more of the preceding Claims, **characterized in that** the hinge pin (17) of the upper mounting (5) consists of an articulation element which has a spherical portion on the pin (17), which is held in corresponding bearing shells of the bearing bracket (11).

12. A retaining apparatus according to one or more of the preceding Claims, **characterized in that** the end of the hinge element (29) has a catch groove (60) behind which a displaceable locking element (61) engages in the release position **(II)** and which is designed so as to be capable of being unlocked in order to pivot the hinge element (29) with the wheel carrier (2) from the release position **(II)** into the fixed position **(I).**

13. A retaining apparatus according to Claim 12, **characterized in that** the locking element (V) consists of a pivotable lever (61) on a pin (65), and the lever (61) engages with its free end in the catch groove (60).

## Revendications

1. Dispositif de fixation pour une roue de secours d'un véhicule automobile, lequel est monté sur le côté extérieur d'un hayon pivotant et comporte un porte-roue, qui est maintenu par des bras de support et qui est monté pivotant par l'intermédiaire de paliers sur la carrosserie du véhicule, **caractérisé en ce que** le dispositif de fixation (1) comporte des bras de support (3, 4), qui sont orientés en s'écartant du porte-roue (2) et sont situés à distance l'un de l'autre et qui sont assemblés par leur extrémité avec des paliers (5, 6) fixés contre la carrosserie du véhicule et qui définissent un axe de pivotement (7) vertical disposé indépendamment de l'axe de pivotement du hayon, et le porte-roue (2) est apte à pivoter autour de cet axe de pivotement (7) dans une position de blocage (I) contre l'arrière du véhicule et est maintenu dans la position de blocage (I) par l'intermédiaire d'un élément d'appui (52) dans un élément de retenue (51) sur la traverse (53) du pare-chocs - en face des paliers (5, 6) - et est monté de manière à pouvoir pivoter librement dans une position de déblocage (II) écartée du hayon, **caractérisé en ce que** le porte-roue (2) comporte un corps en forme de coque (10), qui est réalisé sous forme de logement pour la roue de secours et qui est entouré par un cadre (9), et les bras de support (3, 4) s'étendent à peu près dans le prolongement du bord supérieur et du bord inférieur du cadre (9), l'élément d'appui (52) est maintenu contre un autre bras de support (50), qui est situé en face du bras de support (4) inférieur, et **en ce que** le palier supérieur (5) comporte une console de support (11) pour l'axe de pivotement (7) vertical formé par un boulon articulé (19), et la console de support (11) est disposée dans une fente latérale (25) du hayon (26) dans la carrosserie du véhicule et est assemblée, par l'intermédiaire d'une cornière de fixation (12), avec un pied arrière (18) de la carrosserie du véhicule, et **en ce que** le palier inférieur (6) comporte une console de support (28), assemblée à la carrosserie du véhicule, ainsi qu'un élément de charnière (29) fixé contre le bras de support (4), et la console de support (28) comporte une plaque de fixation (30) arrière et des plaques en porte-à-faux (31, 32) adjacentes à cette dernière, situées à distance l'une de l'autre et munies de trous (33) pour l'axe de pivotement (7) vertical, et un levier articulé (43) insérable est maintenu pivotant entre les plaques en porte-à-faux (31, 32) sur des douilles de guidage (34, 35) d'un boulon articulé (36).

2. Dispositif de fixation selon la revendication 1, **caractérisé en ce que** la cornière de fixation (12) est fixée avec une de ses branches de fixation (19) pour la console de support (11) contre une face de paroi intérieure (20) du pied arrière (18) et avec son autre branche de fixation (21) contre une face de paroi extérieure (22) du pied arrière (18).

3. Dispositif de fixation selon la revendication 1 ou 2, **caractérisé en ce que** la console de support (11) comporte un bras en porte-à-faux (24), qui coopère avec la branche de fixation (19) de la cornière de fixation (12) et contre lequel est adjacent un segment de palier réalisé avec une section en forme de U, qui comporte des plaques de support (14, 15) disposées à distance l'une de l'autre, dans lesquelles sont réalisés les trous pour boulons (16) et lesquelles avec leur paroi arrière (R) prennent appui, de manière ajustée par leur forme, contre la face de paroi extérieure du pied de carrosserie (18).

4. Dispositif de fixation selon une ou plusieurs des revendications précédentes, **caractérisé en ce que** le pied de carrosserie (18) comporte une ouverture débouchante (23) pour l'agencement interne de la branche de fixation (19) de la cornière de fixation 12).

5. Dispositif de fixation selon une ou plusieurs des revendications précédentes, **caractérisé en ce que** la console de support (11) est entourée par un élément de recouvrement (13) enfichable, qui comporte une ouverture (A) pour le bras de support (4) et qui, avec sa face frontale arrière, est étroitement adjacent à la paroi du pied de carrosserie (18).

6. Dispositif de fixation selon une ou plusieurs des revendications précédentes, **caractérisé en ce qu'**entre la console de support (28) et l'élément de charnière (29) est disposé un ressort pneumatique (40), qui est articulé, d'une part, contre un levier (41) en porte-à-faux sur la console de support (28) et, d'autre part, dans un logement (55) sur le levier articulé (43).

7. Dispositif de fixation selon la revendication 9, **caractérisé en ce que** le ressort pneumatique (40), dans la position de blocage (I) du porte-roue (2) possède un couple de fermeture maximum avec le bras de levier (a), et dans une position de pivotement du porte-roue (2) vers la position de déblocage (II) - après avoir franchi une position de point mort - possède un couple de pivotement maximum avec le bras de levier (b).

8. Dispositif de fixation selon une ou plusieurs des revendications précédentes, **caractérisé en ce que** le palier inférieur (6) est disposé dans une découpe (45) du pare-chocs (46), dans laquelle est disposé un cache (47), dans lequel l'élément de charnière (9) est enrobé en étant mis en place depuis l'extérieur.

9. Dispositif de fixation selon une ou plusieurs des revendications précédentes, **caractérisé en ce qu'**à la traverse (53) du pare-chocs est assemblé un élément de retenue (51) en forme de caisson, dans lequel un élément d'appui (52) du porte-roue (2) peut être enfiché en étant bloqué dans la position de blocage (I).

10. Dispositif de fixation selon une ou plusieurs des revendications précédentes, **caractérisé en ce que** dans l'élément de retenue (51) est montée une serrure à pêne rotatif (54), qui entre en prise avec un boulon (55) de l'élément d'appui (52) et la serrure à pêne rotatif (54) peut être verrouillée et/ou déverrouillée par l'intermédiaire de moyens d'actionnement.

11. Dispositif de fixation selon une ou plusieurs des revendications précédentes, **caractérisé en ce que** le boulon articulé (17) du palier supérieur (5) est formé par un élément d'articulation qui comporte une rotule sur le boulon (17), qui est maintenue dans des coussinets correspondants de la console de support (11).

12. Dispositif de fixation selon une ou plusieurs des revendications précédentes, **caractérisé en ce que** l'élément de charnière (29) comporte du côté extrémité une rainure d'arrêt (60), derrière laquelle, dans la position de déblocage (II), s'engage un élément de verrouillage (61) réglable et pouvant être déverrouillé pour permettre le pivotement de l'élément de charnière (29) avec le porte-roue (2) depuis la position de déblocage (II) vers la position de blocage (I).

13. Dispositif de fixation selon la revendication 12, **caractérisé en ce que** l'élément de verrouillage (V) est formé par un levier (61) pivotant sur un boulon (65) et le levier (61) entre en prise avec son extrémité libre dans la rainure d'arrêt (60).
